# EUROPEAN PATENT APPLICATION

(11) **EP 4 831 023 A1**
(43) Date of publication of application: **28.10.2026**
(21) Application number: 23961701.2
(22) Date of filing: 22.12.2023
(51) Int. Cl.: B60W 30/02

(54) **DRIVING SUPPORT METHOD AND DRIVING SUPPORT DEVICE**

(71) Applicant: Nissan Motor Co., Ltd., Yokohama-shi, Kanagawa 221-0023 (JP)
(72) Inventor: TSUDA Fumiya, Atsugi-shi, Kanagawa 243-0123 (JP)
(74) Representative: Grünecker Patent- und Rechtsanwälte PartG mbB
(86) International application number: PCT/JP2023/046223
(87) International publication number: WO 2025/134372

(57) **Abstract**

A travel assistance method includes: determining a target lateral position at a forward gaze distance ahead and calculating a target slip angle to cause a vehicle body to point to the target lateral position (S3); calculating target braking/driving forces of a front wheel and a rear wheel according to the target slip angle (S5); calculating at least one of a slip ratio of a wheel or a wheel speed difference between a front wheel and a rear wheel as a tire state quantity (S4); setting an allowable limit of the tire state quantity (S6); when the calculated tire state quantity does not exceed the set allowable limit, causing a front wheel and a rear wheel to generate the target braking/driving forces (S11); when the calculated tire state quantity exceeds the predetermined allowable limit, correcting a distribution ratio or a sum of the target braking/driving forces in such a way that the tire state quantity becomes less than or equal to the set allowable limit (S12 to S14), and causing a front wheel and a rear wheel to generate the target braking/driving forces after correction; and when the vehicle is turning, suppressing correction of the target braking/driving forces (S8).

## Description

### Technical Field

The present invention relates to a travel assistance method and a travel assistance device.

### Background Art

A technology for setting a braking/driving force between front wheels and rear wheels in such a way that a tire state quantity, such as a slip ratio of a tire and a wheel speed difference between the front wheels and the rear wheels, does not exceed an allowable limit has been proposed. For example, PTL 1 describes a variable torque transmission mechanism that controls the variable torque transmission mechanism in such a way that a relationship between the slip ratio of the front wheels and the slip ratio of the rear wheels coincides with a preset relationship.

### Citation List

### Patent Literature

JP H02-227333 A

### Summary of Invention

### Technical Problem

On the other hand, by controlling a slip angle (for example, a vehicle body slip angle or a tire slip angle) through braking/driving force distribution between the front wheels and the rear wheels, steering stability performance can be improved. However, when the tire state quantity exceeding the allowable limit causes the braking/driving force distribution to be limited as described in PTL 1, there is a risk that suitable steering stability performance cannot be achieved. An object of the present invention is to improve a balance between a slip angle achieving suitable steering stability performance and a tire state quantity ensuring stability.

### Solution to Problem

According to one aspect of the present invention, there is provided a travel assistance method including: calculating a target yaw rate from vehicle speed and a steering angle of a vehicle; determining a target lateral position a forward gaze distance ahead, based on the target yaw rate, and calculating a target slip angle to cause a vehicle body to point to the target lateral position; calculating target braking/driving forces of a front wheel and a rear wheel according to the target slip angle; calculating at least one of a slip ratio of a wheel or a wheel speed difference between a front wheel and a rear wheel as a tire state quantity; when the calculated tire state quantity does not exceed a predetermined allowable limit, causing a front wheel and a rear wheel to generate the target braking/driving forces; when the calculated tire state quantity exceeds the predetermined allowable limit, correcting a target braking force of a front wheel and/or a rear wheel in such a way that the tire state quantity becomes less than or equal to the predetermined allowable limit, and causing a front wheel and a rear wheel to generate the target braking/driving forces after correction; and when the vehicle is turning, suppressing correction of the target braking/driving forces.

### Advantageous Effects of Invention

According to an aspect of the present invention, it is possible to improve a balance between a slip angle achieving suitable steering stability performance and a tire state quantity ensuring stability.

### Brief Description of Drawings

FIG. 1 is a schematic configuration diagram of an example of a travel assistance device of embodiments;
FIGS. 2A to 2E are explanatory diagrams of a travel assistance method of the embodiments;
FIGS. 3A to 3D are other explanatory diagrams of the travel assistance method of the embodiments;
FIG. 4 is a block diagram of an example of a functional configuration of a chassis controller;
FIG. 5 is an explanatory diagram of an example of a method for setting a target slip angle;
FIG. 6 is an explanatory diagram of an example of a method for calculating a slip ratio correction value;
FIG. 7 is a block diagram of an example of a functional configuration of a drive source controller;
FIG. 8 is a flowchart of an example of a travel assistance method of a first embodiment;
FIG. 9 is a flowchart of an example of a travel assistance method of a second embodiment; and
FIG. 10 is a flowchart of an example of a travel assistance method of a third embodiment.

### Description of Embodiments

### (First Embodiment)

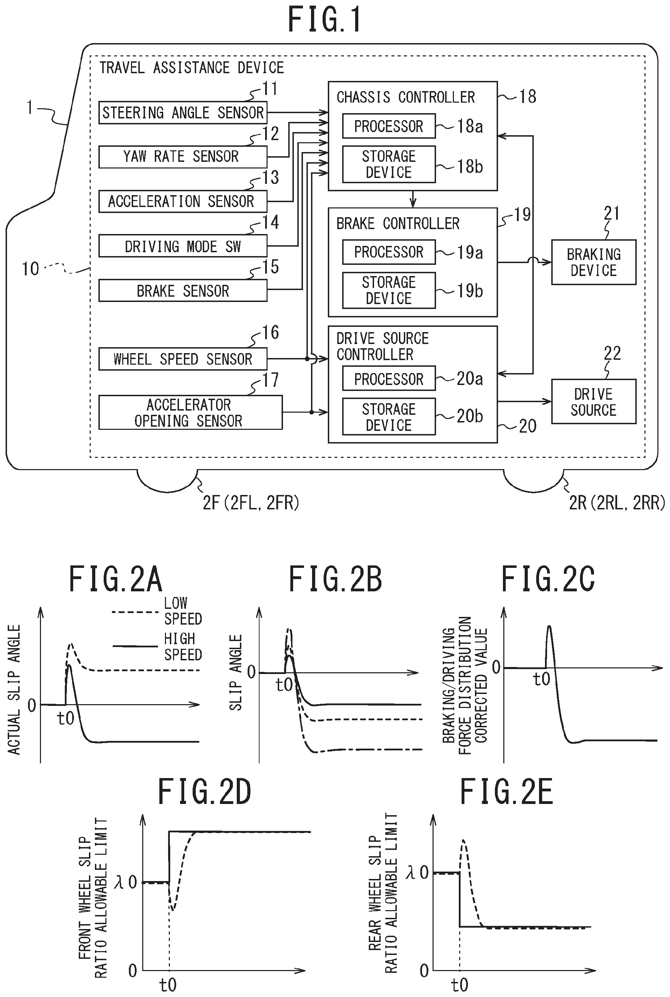

FIG. 1 is now referred to. A travel assistance device 10 includes a steering angle sensor 11, a yaw rate sensor 12, an acceleration sensor 13, a driving mode switch (SW) 14, a brake sensor 15, a wheel speed sensor 16, an accelerator opening sensor 17, a chassis controller 18, a brake controller 19, a drive source controller 20, a braking device 21, and a drive source 22.

The steering angle sensor 11 detects a steering angle δs of a steering wheel. Herein, when the steering wheel is steered in the leftward direction and the rightward direction, a sign of the steering angle δs and a sign of a front wheel turning angle δf are defined as positive and negative, respectively. The yaw rate sensor 12 detects an actual yaw rate γa of a vehicle 1. The acceleration sensor 13 detects lateral acceleration that is acceleration in the vehicle width direction of the vehicle 1. The driving mode switch (SW) 14 is a switch that accepts selection input to select a response characteristic of the vehicle 1 responding to driving operation performed by a driver. For example, the driving mode switch 14 may be a switch to switch driving modes that represent driving characteristics of the vehicle 1. For example, the driving modes may include a first mode (a sport mode) in which the response characteristic of the vehicle 1 responding to the driving operation is high and a second mode (an economy mode) in which the response characteristic of the vehicle 1 responding to the driving operation is gentle.

The brake sensor 15 detects a brake operation amount Br that is an operation amount of a brake pedal. The wheel speed sensor 16 detects wheel speeds VwFL, VwFR, VwRL, and VwRR of a left front wheel 2FL, a right front wheel 2FR, a left rear wheel 2RL, and a right rear wheel 2RR, respectively. In the following description, the left front wheel 2FL and right front wheel 2FR are referred to as "front wheels 2F", and the left rear wheel 2RL and right rear wheel 2RR are referred to as "rear wheels 2R" in some cases. The accelerator opening sensor 17 detects an accelerator operation amount Ac that is an operation amount of an accelerator pedal.

The chassis controller 18 is an electronic control unit (ECU) that performs calculation of an operation amount required for chassis control of the vehicle 1. The chassis controller 18 outputs a longitudinal tire force that the front wheels 2F and the rear wheels 2R are to be caused to generate to the drive source controller 20. The chassis controller 18 outputs a braking force that the front wheels 2F and the rear wheels 2R are to be caused to generate to the brake controller 19. The chassis controller 18 includes a processor 18a and peripheral components, such as a storage device 18b. Functions of the chassis controller 18, which will be described below, are achieved by, for example, the processor 18a executing computer programs stored in the storage device 18b.

The chassis controller 18 may be formed using dedicated hardware for performing various types of information processing that will be described below. For example, the chassis controller 18 may include a functional logic circuit that is implemented in a general-purpose semiconductor integrated circuit. For example, the chassis controller 18 may include a programmable logic device (PLD), such as a field-programmable gate array (FPGA), and the like. The same applies to the brake controller 19 and the drive source controller 20.

The brake controller 19 is an ECU that causes the braking device 21 to generate braking forces in the front wheels and the rear wheels in accordance with information from the chassis controller 18. The brake controller 19 includes a processor 19a and peripheral components, such as a storage device 19b. Functions of the brake controller 19 are achieved by, for example, the processor 19a executing computer programs stored in the storage device 19b.

The drive source controller 20 is an ECU that calculates braking/driving forces to be generated at the front wheels and the rear wheels based on a signal from the accelerator opening sensor 17 and that causes the drive source 22, such as an engine and a motor, to generate the calculated braking/driving forces. In addition, the drive source controller 20 corrects a distribution ratio of braking/driving forces to be generated at the front wheels and the rear wheels in accordance with information from the chassis controller 18. Note that the drive source controller 20 may be configured to change a control amount of each of the front wheels and the rear wheels. The drive source controller 20 includes a processor 20a and peripheral components, such as a storage device 20b. Functions of the drive source controller 20 are achieved by, for example, the processor 20a executing computer programs stored in the storage device 20b.

Next, an outline of a travel assistance method of a first embodiment will be described. The travel assistance device 10 improves steering stability performance by controlling a vehicle body slip angle β through braking/driving force distribution between the front wheels 2F and the rear wheels 2R and also controls the braking/driving forces between the front wheels 2F and the rear wheels 2R in such a way that a slip ratio that is a "tire state quantity" does not exceed a slip ratio allowable limit. Note that the vehicle body slip angle β is an inclination angle of the longitudinal direction of the vehicle body of the vehicle 1 with respect to a traveling direction of the vehicle 1.

For example, when a slip ratio of the front wheels 2F exceeds the slip ratio allowable limit, the drive source controller 20 transfers a portion of braking/driving force distributed to the front wheels 2F to the rear wheels 2R. In addition, when a slip ratio of the rear wheels 2R exceeds the slip ratio allowable limit, the drive source controller 20 transfers a portion of braking/driving force distributed to the rear wheels 2R to the front wheels 2F.

FIG. 2A is a diagram illustrative of temporal change in the vehicle body slip angle β at an initial stage (transient state) and a later stage (steady state) of turning of the vehicle 1 in a case where the turning is started at time t0, where a solid line indicates the vehicle body slip angle β at high speed and a dashed line indicates the vehicle body slip angle β at low speed. Herein, a sign of the vehicle body slip angle β is defined as "positive" when the vehicle 1 is in an "outwardly-directed state", and the sign of the vehicle body slip angle β is defined as "negative" when the vehicle 1 is in an "inwardly-directed state". The "outwardly-directed state" is a state in which the longitudinal direction of the vehicle body of the vehicle 1 is displaced in a direction opposite to a turning direction of the vehicle 1 from the traveling direction of the vehicle 1, and the "inwardly-directed state" is a state in which the longitudinal direction of the vehicle body of the vehicle 1 is displaced in the same direction as the turning direction of the vehicle 1 from the traveling direction of the vehicle 1.

As illustrated in FIG. 2A, at the initial stage of the turning, the vehicle 1 is brought into the outwardly-directed state. In the later stage of the turn, when vehicle speed of the vehicle 1 is high, the vehicle 1 is brought into the inwardly-directed state, and when the vehicle speed is low, the vehicle 1 is brought into the outwardly-directed state.

The chassis controller 18 calculates a target vehicle body slip angle βt in such a way as to reduce the outwardly-directed state and the inwardly-directed state of the vehicle 1, and corrects target braking/driving force distribution between the front wheels 2F and the rear wheels 2R in such a way as to achieve the target vehicle body slip angle βt.

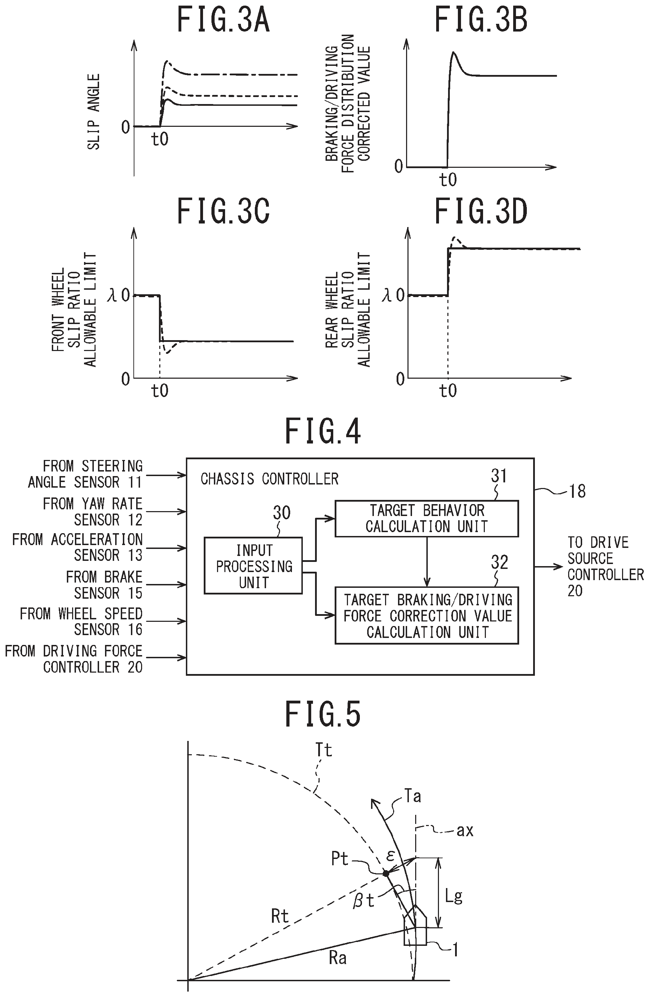

FIG. 2B illustrates the vehicle body slip angle in a case where the vehicle speed is high. A dashed-dotted line illustrates an actual vehicle body slip angle βa, a dashed line illustrates the target vehicle body slip angle βt, and a solid line illustrates a slip angle difference that is a difference between the foregoing. FIG. 2C illustrates a corrected value of the target braking/driving force distribution that is set based on the slip angle difference in FIG. 2B. In FIG. 2C, a sign of the corrected value to transfer a braking/driving force from the front wheels 2F to the rear wheels 2R is defined as "positive", and the sign of the corrected value to transfer a braking/driving force from the rear wheels 2R to the front wheels 2F is defined as "negative". The same applies to FIG. 3B.

In the initial stage of the turn, the actual vehicle body slip angle βa becomes larger than the target vehicle body slip angle βt (that is, the vehicle 1 is brought into the outwardly-directed state). Therefore, to increase lateral forces of tires of the front wheels 2F, the chassis controller 18 reduces a braking/driving force distribution to the front wheels 2F and also increases a braking/driving force distribution to the rear wheels 2R (that is, transfers the braking/driving force from the front wheels 2F to the rear wheels 2R). In the later stage of the turn, the actual vehicle body slip angle βa becomes smaller than the target vehicle body slip angle βt (that is, the vehicle 1 is brought into the inwardly-directed state). Therefore, to increase lateral forces of tires of the rear wheels 2R, the chassis controller 18 reduces the braking/driving force distribution to the rear wheels 2R and also increases the braking/driving force distribution to the front wheels 2F (that is, transfers the braking/driving force from the rear wheels 2R to the front wheels 2F).

On the other hand, when the slip ratio of the front wheels 2F or the rear wheels 2R exceeds the allowable limit as described above, the drive source controller 20 corrects the braking/driving force distribution. Therefore, when the transfer of the braking/driving force from the front wheels 2F to the rear wheels 2R causes the slip ratio of the rear wheels 2R to exceed the slip ratio allowable limit at the time of correcting the braking/driving force distribution according to the vehicle body slip angle, the drive source controller 20 reduces the braking/driving force distribution to the rear wheels 2R. When in association with the reduction in the braking/driving force distribution to the rear wheels 2R, the braking/driving force distribution to the front wheels 2F is increased, the lateral forces of the front wheels 2F becomes unable to be increased and there is a risk that the target vehicle body slip angle βt becomes unable to be achieved. The same applies to a case where the slip ratio of the front wheels 2F exceeds the slip ratio allowable limit due to transfer of the braking/driving force from the rear wheels 2R to the front wheels 2F.

Therefore, when the vehicle 1 is turning, the drive source controller 20 suppresses correction of the braking/driving force distribution corrected by the chassis controller 18 to achieve the target vehicle body slip angle βt, the correction being performed due to the slip ratio exceeding the slip ratio allowable limit. For example, the drive source controller 20 may correct the slip ratio allowable limit according to a corrected value of a target braking/driving force to achieve the target vehicle body slip angle βt, and thereby relax limitation of the slip ratio based on the slip ratio allowable limit. Since due to the relaxation, the correction of the braking/driving force distribution performed by the chassis controller 18 becomes less likely to be limited, the achievement of the target vehicle body slip angle βt is facilitated.

FIGS. 2D and 2E illustrate the slip ratio allowable limits of the front wheels and the rear wheels when the vehicle speed is high, respectively. Solid lines illustrate basic allowable limits to achieve the target vehicle body slip angle βt, the basic allowable limits being determined without taking into consideration the braking/driving force distribution between the front wheels 2F and the rear wheels 2R. For example, the basic allowable limits may be set to a value λ0 that brings acceleration/deceleration force when traveling straight to the maximum, or may be a value to which the slip ratio λ0 is corrected according to a geometric difference between trajectories of the front and rear wheels due to turning or lateral acceleration. On the other hand, dashed lines illustrate corrected allowable limits to which slip ratios are corrected based on the corrected value of the target braking/driving force distribution in FIG. 2C. The slip ratio allowable limits are corrected to, at the initial stage of the turning, become smaller on the front wheel 2F side and become larger on the rear wheel 2R side than before the start of the turning. The slip ratio allowable limits are corrected to, in the later stage of the turning, become larger on the front wheel 2F side and become smaller on the rear wheel 2R side than before the start of the turning. By making a correction in such a way that the slip ratio allowable limit of the rear wheels 2R becomes large at the initial stage of the turning in this way, an increase in the slip ratio of the rear wheels 2R is allowed. Because of this configuration, increase in the distribution of the braking/driving force to the rear wheels 2R becomes less likely to be obstructed. Since as a result, the distribution of the braking/driving force to the front wheels 2F can be reduced, the lateral force of the front wheels 2F is increased and the outwardly-directed state at the initial stage of the turning can thereby be suppressed.

FIG. 3A illustrates vehicle body slip angles in a case where the vehicle speed is low. A dashed-dotted line illustrates the actual vehicle body slip angle βa, a dashed line illustrates the target vehicle body slip angle βt, and a solid line illustrates a slip angle difference that is a difference between the foregoing. FIG. 3B illustrates a corrected value of the target braking/driving force distribution that is set based on the slip angle difference in FIG. 3A. FIGS. 3C and 3D illustrate the slip ratio allowable limits of the front wheels and the rear wheels when the vehicle speed is high, respectively. Solid lines illustrate basic allowable limits, and dashed lines illustrate corrected allowable limits obtained by correcting the basic allowable limits according to the correction value of the target braking/driving force distribution in FIG. 3B. The slip ratio allowable limits are corrected to, at the initial stage of the turning, become smaller on the front wheel 2F side and become larger on the rear wheel 2R side than before the start of the turning. The slip ratio allowable limits are corrected to, in the later stage of the turning, become smaller on the front wheel 2F side and become larger on the rear wheel 2R side than before the start of the turning. By making a correction in such a way that the slip ratio allowable limit of the rear wheels 2R becomes large at the initial stage of the turning, an increase in the slip ratio of the rear wheels 2R is allowed, as with FIG. 2E. Because of this configuration, increase in the distribution of the braking/driving force to the rear wheels 2R becomes less likely to be obstructed. Since as a result, the distribution of the braking/driving force to the front wheels 2F can be reduced, the lateral force of the front wheels 2F is increased and the outwardly-directed state at the initial stage of the turning can thereby be suppressed.

FIG. 4 is a block diagram of an example of a functional configuration of the chassis controller 18. The chassis controller 18 includes an input processing unit 30, a target behavior calculation unit 31, and a target braking/driving force correction value calculation unit 32.

The input processing unit 30 calculates vehicle speed Vv, based on the wheel speeds VwFL, VwFR, VwRL, and VwRR detected by the wheel speed sensor 16. The input processing unit 30 calculates the front wheel turning angle δf, based on the steering angle δs detected by the steering angle sensor 11. The input processing unit 30 calculates driver requested deceleration ad1, based on the brake operation amount Br detected by the brake sensor 15. The input processing unit 30 receives total target braking/driving force F0 that is calculated based on the accelerator operation amount Ac detected by the accelerator opening sensor 17, from the drive source controller 20, and calculates driver requested acceleration ad2, based on the total target braking/driving force F0.

The target behavior calculation unit 31 calculates a target yaw rate γt from the vehicle speed Vv and the steering angle δs, determines a target lateral position Pt at a predetermined forward gaze distance Lg ahead, based on the target yaw rate γt, and calculates the target vehicle body slip angle βt to cause the vehicle body to point to the target lateral position Pt.

FIG. 5 is an explanatory diagram of an example of a method for setting the target vehicle body slip angle βt. A dashed line Tt illustrates a target turning trajectory of the vehicle 1, and a solid line Ta illustrates an actual turning trajectory. In the example in FIG. 5, a point at the forward gaze distance Lg ahead on the target turning trajectory Tt is set as the target lateral position Pt. Turning radius Rt of the target turning trajectory Tt is given by Rt=Vv/yt, and turning radius Ra of the actual turning trajectory Ta is given, using the actual yaw rate γa, by Ra=Vv/ya. The forward gaze distance Lg is given by a product of the vehicle speed Vv and a predetermined forward gaze time T (T×Vv). A deviation amount ε of an axis ax in the longitudinal direction of the vehicle body from the target turning trajectory Tt at a point at the forward gaze distance Lg ahead is obtained by ε=(Ra²+LG²)^{1/2}-Rt.

When a change angle for the axis ax in the longitudinal direction of the vehicle body to point to the target lateral position Pt is assumed to be the target vehicle body slip angle βt, since the deviation amount ε can be approximated as ε≈Lg×sinβt, the target vehicle body slip angle βt can be calculated using the equation (1) below.
[Math 1] $βt = \frac{\sqrt{{Ra}^{2} + {Lg}^{2}}}{Lg} - \frac{Rt}{Lg}$ (1)

Note that the target vehicle body slip angle βt may be calculated by adjusting adjustment constants, namely adjustment constants a, b, and c, in the equation (2) below in such a way as to achieve the same characteristics as the target vehicle body slip angle βt in the equation (1) below. In the equations (3) to (7) below, m is weight of the vehicle, I is a yaw inertia radius, l is a wheelbase, lf and lr are distances from a center P of gravity of the vehicle 1 to a front wheel axle and a rear wheel axle, respectively, and Kf and Kr are equivalent cornering powers of the front wheels and the rear wheels, respectively. [Math 2] $\begin{matrix}βt = {cG}_{β} \frac{1 + {aT}_{β} s}{1 + \frac{2 bζs}{{ω}_{n}} + \frac{{s}^{2}}{{ω}_{n}^{2}}} δf \left(2\right) \\ {ω}_{n} = \frac{2 l}{Vv} \sqrt{\frac{KfKr}{mI}} \sqrt{1 + {AVv}^{2}} \left(3\right) \\ ζ = \frac{m \left({lf}^{2}Kf+{lr}^{2}Kr\right) + I \left(Kf+Kr\right)}{l \sqrt{mIKfKr \left(1+{AVv}^{2}\right)}} \left(4\right) \\ {G}_{β} = \frac{1 - \frac{mlf}{2 llrKr} {Vv}^{2}}{1 + {AVv}^{2}} \frac{lr}{l} \left(5\right) \\ {T}_{β} = \frac{IVv}{2 llrKr} \frac{1}{1 - \frac{mlf}{2 llrKr} {Vv}^{2}} \left(6\right) \\ A = - \frac{m}{2 {l}^{2}} \frac{lfKf - lrKr}{KfKr} \left(7\right)\end{matrix}$

The target braking/driving force correction value calculation unit 32 estimates a current actual vehicle body slip angle βa of the vehicle 1. For example, the target braking/driving force correction value calculation unit 32 estimates the actual vehicle body slip angle βa in accordance with the equation (8) below.
[Math 3] $βa = {G}_{β} \frac{1 + {T}_{β} s}{1 + \frac{2 ζs}{{ω}_{n}} + \frac{{s}^{2}}{{ω}_{n}^{2}}} δf$ (8)

The target braking/driving force correction value calculation unit 32 calculates a slip angle difference Δβ=(βt-βa) that is a difference between the target vehicle body slip angle βt and the actual vehicle body slip angle βa, and determines whether the actual vehicle body slip angle βa is in the inwardly-directed state or the outwardly-directed state with respect to the target vehicle body slip angle βt. For example, when a product of the slip angle difference Δβ and a sign sign(δf) of the front wheel turning angle δf, that is, Δβ×sign(δf), is positive, the target braking/driving force correction value calculation unit 32 determines that the actual vehicle body slip angle βa is in the outwardly-directed state, and when the product Δβ×sign(δf) is negative, the target braking/driving force correction value calculation unit 32 determines that the actual vehicle body slip angle βa is in the inwardly-directed state.

The target braking/driving force correction value calculation unit 32 calculates target braking/driving force correction values ΔFf and ΔFr that are correction values for longitudinal tire forces of the front wheels 2F and rear wheels 2R, depending on whether the actual vehicle body slip angle βa is in the inwardly-directed state or the outwardly-directed state with respect to the target vehicle body slip angle βt. For example, when the actual vehicle body slip angle βa is in the outwardly-directed state with respect to the target vehicle body slip angle βt, the target braking/driving force correction value calculation unit 32 may calculate a negative target braking/driving force correction value ΔFf reducing the longitudinal tire force of the front wheels 2F and/or a positive target braking/driving force correction value ΔFr increasing the longitudinal tire force of the rear wheels 2R. In addition, when the actual vehicle body slip angle βa is in the inwardly-directed state with respect to the target vehicle body slip angle βt, the target braking/driving force correction value calculation unit 32 may calculate a positive target braking/driving force correction value ΔFf increasing the longitudinal tire force of the front wheels 2F and/or a negative target braking/driving force correction value ΔFr reducing the longitudinal tire force of the rear wheels 2R.

In the present embodiment, the target braking/driving force correction value calculation unit 32 calculates a product of a difference (βt-βa) between the target vehicle body slip angle βt and the actual vehicle body slip angle βa, a predetermined proportional gain Pb, the sign sign(δf) of the front wheel turning angle δf, and the total target braking/driving force F0 as the target braking/driving force correction value ΔFr=(βt-βa)×Pb×sign(δf)×F0 for the rear wheels 2R. The target braking/driving force correction value ΔFf for the front wheels 2F may be calculated as ΔFf=-ΔFr.

The target braking/driving force correction value calculation unit 32 calculates slip ratio correction values Δλ. The slip ratio correction values Δλ are correction values for correcting the slip ratio allowable limits to slip ratios generated by the target braking/driving forces of the front wheels and the rear wheels to achieve the target vehicle body slip angle βt.

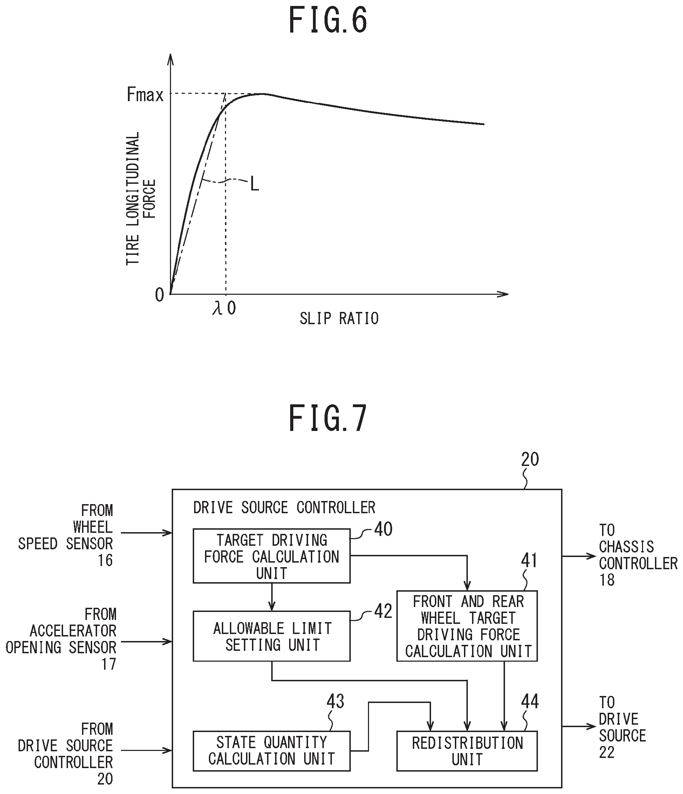

For example, the target braking/driving force correction value calculation unit 32 calculates a slip ratio correction value Δλ for correcting the slip ratio allowable limit of the front wheels 2F from the target braking/driving force correction value ΔFf of the front wheels 2F, and calculates a slip ratio correction value Δλ for correcting the slip ratio allowable limit of the rear wheels 2R from the target braking/driving force correction value ΔFr of the rear wheels 2R. FIG. 6 is an explanatory diagram of an example of a method for calculating a slip ratio correction value Δλ. An ideal slip ratio λ0 is a slip ratio at which the longitudinal force generated by a tire reaches a maximum value Fmax. By approximating a relationship of the slip ratio with respect to the longitudinal tire force, using an approximate straight line L with a slope obtained by dividing the maximum value Fmax by the ideal slip ratio λ0, the amounts of change in the slip ratios caused by the target braking/driving force correction values ΔFf and ΔFr can be calculated as the slip ratio correction values Δλ.

When a friction coefficient of a road surface is denoted by µ and height of the center of gravity of the vehicle 1 is denoted by h, maximum loads on the front wheels 2F and the rear wheels 2R when the vehicle 1 accelerates with acceleration α are m×g×(α-µ×h/l) and m×g×((1-α)+µ×h/l), respectively, and maximum loads on the front wheels 2F and the rear wheels 2R when the vehicle 1 decelerates with deceleration α are m×g×(α+µ×h/l) and m×g×((1-α)-µ×h/l), respectively. The target braking/driving force correction value calculation unit 32 calculates the slip ratio correction values Δλ for the front wheels 2F and the rear wheels 2R in acceleration and deceleration, based on the equations (9) to (12) below. [Math 4] $\begin{matrix}\begin{matrix}FRONT WHEELS IN ACCELERATION \\ Δλ = \frac{λ 0 \times Δ Ff}{μmg \left(α-μ\frac{h}{l}\right)} \left(9\right)\end{matrix} & \begin{matrix}FRONT WHEELS IN DECELERATION \\ Δλ = \frac{λ 0 \times Δ Ff}{μmg \left(α+μ\frac{h}{l}\right)} \left(10\right)\end{matrix} \\ \begin{matrix}REAR WHEELS IN ACCELERATION \\ Δλ = \frac{λ 0 \times Δ Fr}{μmg \left(\left(1-α\right)+μ\frac{h}{l}\right)} \left(11\right)\end{matrix} & \begin{matrix}REAR WHEELS IN DECELERATION \\ Δλ = \frac{λ 0 \times Δ Ff}{μmg \left(\left(1-α\right)-μ\frac{h}{l}\right)} \left(12\right)\end{matrix}\end{matrix}$

As described above, by incorporating a term (µ×h/l) corresponding to load change into the equations (9) to (12), it becomes possible to correct the slip ratio allowable limit of the front wheels 2F with a slip ratio correction value Δλ that is set to have a smaller value at the time of braking than a value at the time of driving and correct the slip ratio allowable limit of the rear wheels 2R with a slip ratio correction value Δλ that is set to have a larger value at the time of braking than a value at the time of driving.

The target braking/driving force correction value calculation unit 32 outputs the target braking/driving force correction values ΔFf and ΔFr and the slip ratio correction values Δλ to the drive source controller 20.

FIG. 7 is a block diagram of an example of a functional configuration of the drive source controller 20. The drive source controller 20 includes a target driving force calculation unit 40, a front and rear wheel target driving force calculation unit 41, an allowable limit setting unit 42, a state quantity calculation unit 43, and a redistribution unit 44. The target driving force calculation unit 40 calculates the total target braking/driving force F0 calculated based on the accelerator operation amount Ac detected by the accelerator opening sensor 17. The front and rear wheel target driving force calculation unit 41 calculates front wheel basic target braking/driving force Ff0 and rear wheel basic target braking/driving force Fr0 by distributing the total target braking/driving force F0 to the front wheels 2F and the rear wheels 2R in accordance with a predetermined distribution method. The front and rear wheel target driving force calculation unit 41 calculates front wheel target braking/driving force Ff and rear wheel target braking/driving force Fr by correcting the front wheel basic target braking/driving force Ff0 and the rear wheel basic target braking/driving force Fr0 with the target braking/driving force correction values ΔFf and ΔFr, respectively.

The allowable limit setting unit 42 sets basic allowable limits to achieve the target vehicle body slip angle βt, the basic allowable limits being determined without taking into consideration the braking/driving force distribution between the front wheels 2F and the rear wheels 2R. The basic allowable limits may be set to a value λ0 that brings acceleration/deceleration force when traveling straight to a maximum, or may be set to a value to which the slip ratio λ0 is corrected according to a geometric difference between trajectories of the front and rear wheels due to turning and lateral acceleration. The allowable limit setting unit 42 sets the slip ratio allowable limits by correcting the basic allowable limits with the slip ratio correction values Δλ.

The state quantity calculation unit 43 calculates an actual slip ratio λa of each wheel. When the wheel speeds VwFL, VwFR, VwRL, and VwRR are collectively referred to as "Vw", the state quantity calculation unit 43 may calculate the actual slip ratios λa by the equation (13) below. $λa = \left(Vv-\left|Vw\right|\right) / Vv$ (13)

The redistribution unit 44 determines whether or not the actual slip ratio λa of each wheel exceeds a slip ratio allowable limit. When the actual slip ratios λa do not exceed the slip ratio allowable limits, the redistribution unit 44 controls the drive source 22 in such a way that the front wheels 2F and the rear wheels 2R directly generate the front wheel target braking/driving force Ff and the rear wheel target braking/driving force Fr, respectively. When an actual slip ratio λa exceeds a corresponding slip ratio allowable limit, the redistribution unit 44 compares the actual slip ratios λa between the front wheels 2F and the rear wheels 2R. When the slip ratio of the front wheels 2F is larger than the slip ratio of the rear wheels 2R, the redistribution unit 44 determines that the front wheels 2F are slipping and corrects a distribution ratio of the target braking/driving forces Ff and Fr in such a way that a portion of the target driving force distributed to the front wheels 2F is redistributed to the rear wheels 2R (in such a way that the front wheel target braking/driving force Ff decreases and the rear wheel target braking/driving force Fr increases). When the slip ratio of the rear wheels 2R is larger than the slip ratio of the front wheels 2F, the redistribution unit 44 determines that the rear wheels 2R are slipping and corrects the distribution ratio of the target braking/driving forces Ff and Fr in such a way that a portion of the target driving force distributed to the rear wheels 2R is redistributed to the front wheels 2F (in such a way that the front wheel target braking/driving force Ff increases and the rear wheel target braking/driving force Fr decreases). The redistribution unit 44 controls the drive source 22 in such a way that the front wheels 2F and the rear wheels 2R generate the corrected target braking/driving forces Ff and Fr, respectively.

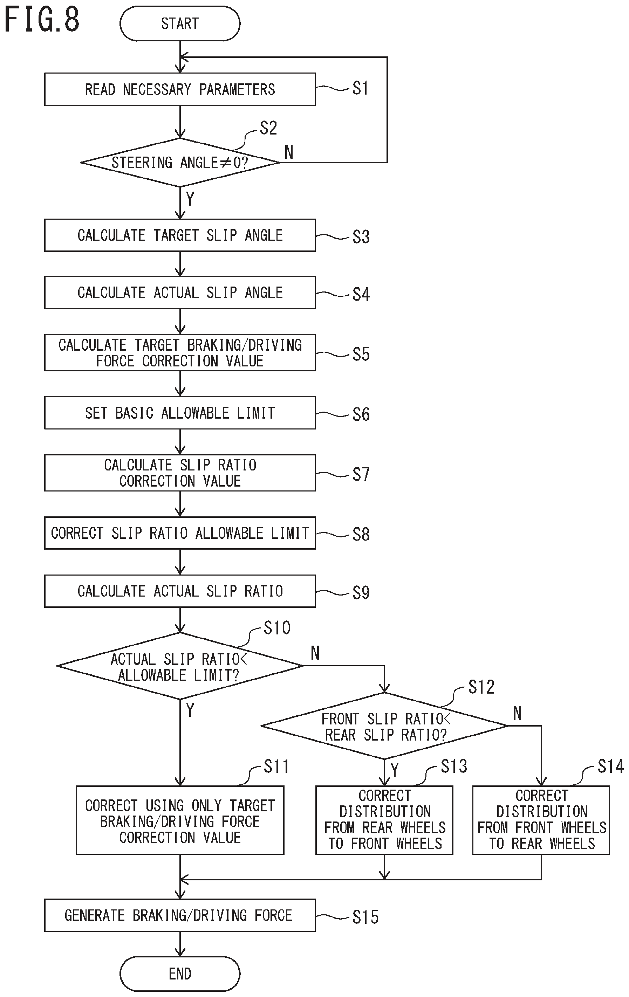

FIG. 8 is a flowchart of an example of a travel assistance method of the first embodiment. In step S1, the chassis controller 18 and the drive source controller 20 read in necessary parameters such as the steering angle δs and the wheel speeds Vw. In step S2, the chassis controller 18 determines whether or not the vehicle 1 is turning. When the vehicle 1 is not turning (step S2: N), the process returns to step S1. When the vehicle 1 is turning (step S2: Y), the process proceeds to step S3. In step S3, the target behavior calculation unit 31 calculates the target vehicle body slip angle βt. In step S4, the target braking/driving force correction value calculation unit 32 estimates the actual vehicle body slip angle βa. In step S5, the target braking/driving force correction value calculation unit 32 calculates the target braking/driving force correction values ΔFf and ΔFr, based on the slip angle difference Δβ.

In step S6, the allowable limit setting unit 42 sets the basic allowable limits. In step S7, the target braking/driving force correction value calculation unit 32 calculates the slip ratio correction values Δλ. In step S8, the allowable limit setting unit 42 sets the slip ratio allowable limits by correcting the basic allowable limits with the slip ratio correction values Δλ. In step S9, the state quantity calculation unit 43 calculates the actual slip ratio λa of each wheel. In step S10, the redistribution unit 44 determines whether or not the actual slip ratios λa are less than the slip ratio allowable limits. When an actual slip ratio λa is greater than or equal to a corresponding slip ratio allowable limit (step S10: N), the process proceeds to step S12. When the actual slip ratios λa are less than the slip ratio allowable limits (step S10: Y), the process proceeds to step S11.

In step S11, the front and rear wheel target driving force calculation unit 41 calculates the front wheel target braking/driving force Ff and the rear wheel target braking/driving force Fr by correcting the distribution ratio of the target braking/driving forces to the front wheels 2F and the rear wheels 2R, using only the target braking/driving force correction values ΔFf and ΔFr, respectively. Subsequently, the process proceeds to step S15. In step S12, the redistribution unit 44 determines whether or not the actual slip ratio of the rear wheels is greater than the actual slip ratio of the front wheels. When the actual slip ratio of the rear wheels is greater than the actual slip ratio of the front wheels (step S12: Y), the process proceeds to step S13. When the actual slip ratio of the rear wheels is less than or equal to the actual slip ratio of the front wheels (step S12: N), the process proceeds to step S14. In step S13, the redistribution unit 44 corrects the distribution ratio of the target braking/driving forces Ff and Fr in such a way that a portion of the target driving force distributed to the rear wheels 2R is redistributed to the front wheels 2F. Subsequently, the process proceeds to step S15. In step S14, the redistribution unit 44 corrects the distribution ratio of the target braking/driving forces Ff and Fr in such a way that a portion of the target driving force distributed to the front wheels 2F is redistributed to the rear wheels 2R. Subsequently, the process proceeds to step S15. In step S15, the drive source 22 causes the front wheels 2F and the rear wheels 2R to generate the target braking/driving forces Ff and Fr, respectively.

### (Variations)

(1) Although in the above-described embodiment, a case where the vehicle body slip angle is controlled as the slip angle is described, the present invention may also be applied to a case where a tire slip angle is controlled as the slip angle. By controlling the tire slip angles of the front wheels 2F, occurrence of understeer can be suppressed, and by controlling the tire slip angles of the rear wheels 2R, occurrence of oversteer can be suppressed. The same applies to a second embodiment and a third embodiment.
(2) Although in the above-described embodiment, an example of a case where the present invention is applied to distribution of the braking/driving forces that the drive source 22 generates at the front wheels 2F and the rear wheels 2R is described, the present invention may also be applied to distribution of braking forces that the braking device 21 generates in the front wheels 2F and the rear wheels 2R. The same applies to the second embodiment and the third embodiment.
(3) The magnitude of the slip ratio correction values Δλ may be changed according to a response characteristic of the vehicle 1 responding to driving operation performed by the driver. For example, in the sport mode where the response characteristic is high, more importance is placed on steering stability performance than stability and the magnitude of the slip ratio correction values Δλ may be made larger than in a case of the economy mode where the response characteristic is gentle.

### (Second Embodiment)

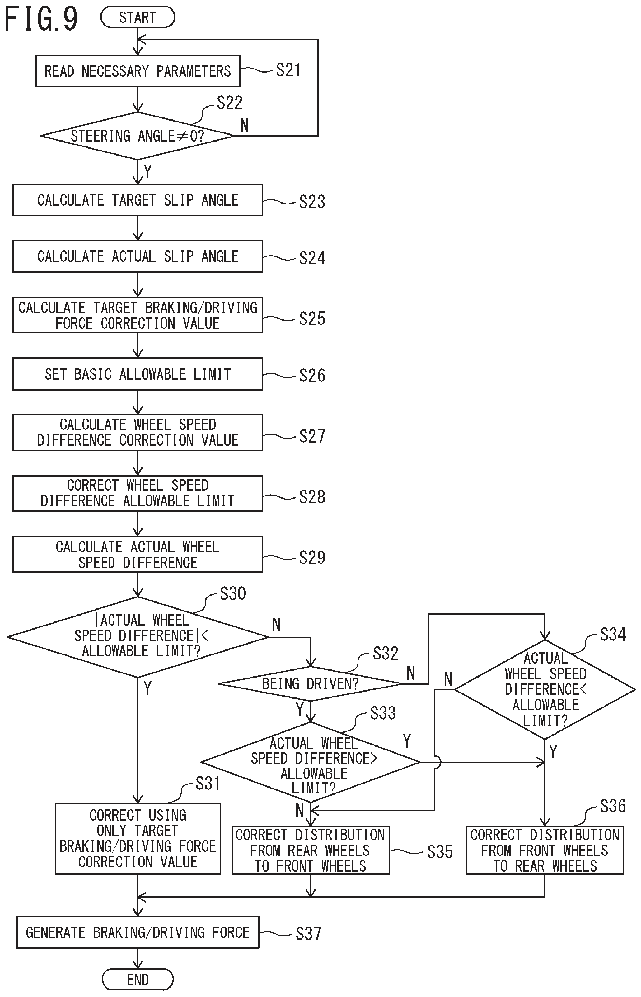

In a second embodiment, braking/driving force distribution between front wheels 2F and rear wheels 2R is controlled in such a way that a wheel speed difference between the front wheels 2F and the rear wheels 2R, the wheel speed difference being a "tire state quantity", does not exceed a wheel speed difference allowable limit. FIG. 9 is a flowchart of an example of a travel assistance method of the second embodiment. Processing in steps S21 to S25 is the same as the processing in steps S1 to S5 in FIG. 8, respectively. In step S26, an allowable limit setting unit 42 sets a basic allowable limit for the wheel speed difference. For example, the allowable limit setting unit 42 may set a wheel speed difference allowed between the front wheels 2F and the rear wheels 2R as the basic allowable limit, based on a geometric linear vehicle model and lateral acceleration Gy.

In step S27, a target braking/driving force correction value calculation unit 32 calculates a wheel speed difference correction value ΔWw. For example, the target braking/driving force correction value calculation unit 32 may calculate the wheel speed difference correction value ΔWw by multiplying a slip ratio correction value Δλ in the first embodiment by vehicle speed Vv. In step S28, the allowable limit setting unit 42 calculates the wheel speed difference allowable limit by correcting the basic allowable limit with the wheel speed difference correction value ΔWw. In step S29, a state quantity calculation unit 43 calculates an actual wheel speed difference between the front wheels 2F and the rear wheels 2R. In step S30, the redistribution unit 44 determines whether or not an absolute value of the actual wheel speed difference is less than the wheel speed difference allowable limit. When the absolute value of the actual wheel speed difference is not less than the wheel speed difference allowable limit (step S30: N), the process proceeds to step S32. When the absolute value of the actual wheel speed difference is less than the wheel speed difference allowable limit (step S30: Y), the process proceeds to step S31. Processing in step S31 is the same as the processing in step S11 in FIG. 8. Subsequently, the process proceeds to step S37.

In step S32, the redistribution unit 44 determines whether or not the vehicle 1 is being driven. When the vehicle 1 is being braked (step S32: N), the process proceeds to step S34. When the vehicle 1 is being driven (step S32: Y), the process proceeds to step S33. In step S33, the redistribution unit 44 determines whether or not the actual wheel speed difference is greater than the wheel speed difference allowable limit. When the actual wheel speed difference is not greater than the wheel speed difference allowable limit (step S33: N), the process proceeds to step S35. When the actual wheel speed difference is greater than the wheel speed difference allowable limit (step S33: Y), the process proceeds to step S36. In step S34, the redistribution unit 44 determines whether or not the actual wheel speed difference is less than the wheel speed difference allowable limit. When the actual wheel speed difference is not less than the wheel speed difference allowable limit (step S34: N), the process proceeds to step S35. When the actual wheel speed difference is less than the wheel speed difference allowable limit (step S34: Y), the process proceeds to step S36.

Processing in steps S35 and S36 is the same as the processing in steps S13 and S14 in FIG. 8, respectively. Subsequently, the process proceeds to step S37. Processing in step S37 is the same as the processing in step S15 in FIG. 8.

Note that the redistribution unit 44 may calculate both actual slip ratios λa of the wheels and the wheel speed difference as tire state quantities. When at least one of the actual slip ratios λa or the absolute value of the actual wheel speed difference exceeds a corresponding allowable limit, the redistribution unit 44 may correct target braking/driving forces Ff and Fr.

### (Third Embodiment)

In a third embodiment, a redistribution unit 44 determines whether or not a tire state quantity becomes less than or equal to an allowable limit when a distribution ratio of target braking/driving forces Ff and Fr is corrected. When the redistribution unit 44 determines that the tire state quantity does not become less than or equal to the allowable limit, the redistribution unit 44 reduces a sum of the target braking/driving forces Ff and Fr.

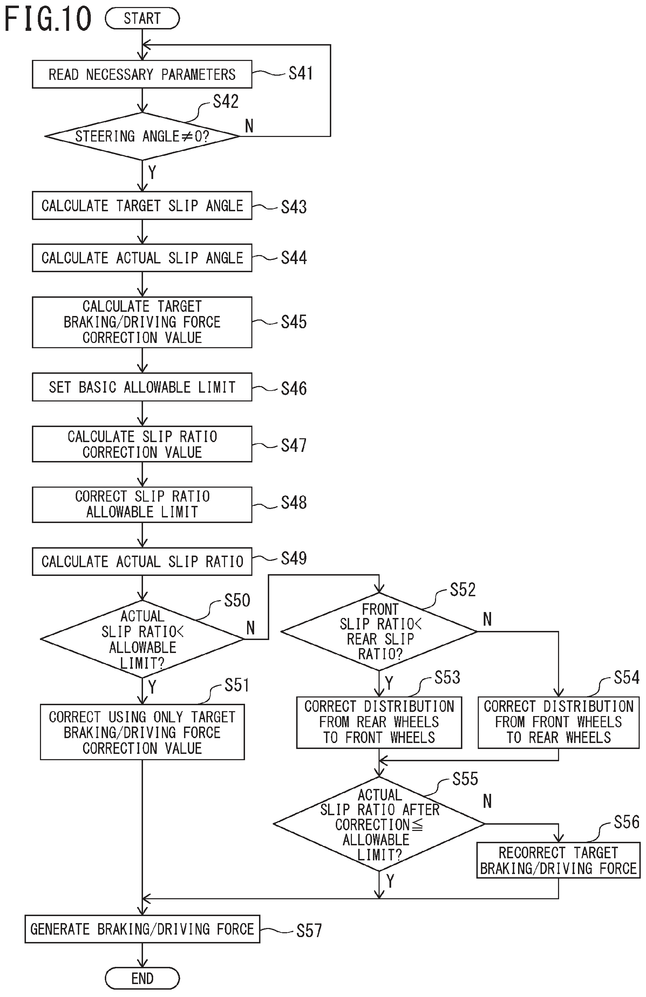

FIG. 10 is a flowchart of an example of a travel assistance method of the third embodiment. Processing in steps S41 to S54 is the same as the processing in steps S1 to S14 in FIG. 8, respectively. In step S55, the redistribution unit 44 determines whether or not, when the distribution ratio of the target braking/driving forces Ff and Fr is corrected, an actual slip ratio λa of a wheel where a distribution of braking/driving force increases due to the correction becomes less than or equal to a slip ratio allowable limit. For example, the redistribution unit 44 may estimate an actual slip ratio λa after correcting the distribution ratio by correcting a current actual slip ratio λa with a slip ratio correction value Δλ. When the actual slip ratio λa becomes less than or equal to the slip ratio allowable limit (step S55: Y), the process proceeds to step S57. When the actual slip ratio λa exceeds the slip ratio allowable limit (step S55: N), the process proceeds to step S56.

In step S56, the redistribution unit 44 recorrects the target braking/driving forces Ff and Fr in such a way that the sum of the target braking/driving forces Ff and Fr decreases, while maintaining the distribution ratio of the target braking/driving forces Ff and Fr calculated by a front and rear wheel target driving force calculation unit 41. For example, the redistribution unit 44, using the target braking/driving forces Ff and Fr calculated by the front and rear wheel target driving force calculation unit 41 and target braking/driving force correction values ΔFf and ΔFr, calculates a corrected target braking/driving force Ffr in a case where a target braking/driving force of front wheels 2F is corrected without changing a target braking/driving force of rear wheels 2R and a corrected target braking/driving force Frr in a case where the target braking/driving force of the rear wheels 2R is corrected without changing the target braking/driving force of the front wheels 2F, in accordance with the equations (14) and (15) below. $Ffr = Ff \times \left(Fr+ΔFr\right) / \left(Ff+ΔFf\right)$ (14) $Frr = Fr \times \left(Ff+ΔFf\right) / \left(Fr+ΔFr\right)$ (15)

When Ffr+Fr is less than Ff+Frr, the redistribution unit 44 corrects the target braking/driving force Ff of the front wheels 2F to the value Ffr. When Ffr+Fr is greater than Ff+Frr, the redistribution unit 44 corrects the target braking/driving force Fr of the rear wheels 2R to the value Frr. Through this processing, it is possible to correct the target braking/driving forces in such a way that the target braking/driving force of one of the front wheels 2F and the rear wheels 2R whose slip ratio exceeds the slip ratio allowable limit decreases, while maintaining the distribution ratio of the target braking/driving forces Ff and Fr calculated by the front and rear wheel target driving force calculation unit 41.

Subsequently, the process proceeds to step S57. Processing in step S57 is the same as the processing in step S15 in FIG. 8.

### (Variation)

In step S55, the redistribution unit 44 may determine whether or not resultant force of longitudinal force and lateral force exerted on a vehicle 1 exceeds a friction limit of tires. For example, the redistribution unit 44 may determine that the resultant force of the longitudinal force and the lateral force exerted on the vehicle 1 exceeds the friction limit when a variable κ in the equation (16) below is less than 1. In the equation (16) below, Xg and Yg are longitudinal acceleration and lateral acceleration detected by an acceleration sensor 13, Xoff and Yoff are predetermined margins, Fx is a target longitudinal force (Ff+Fr), and Fy is a target lateral force m×Vv×(γ+dβa/dt). A yaw rate γ may be a detected value detected by a yaw rate sensor 12, and a derivative value dβa/dt may be obtained by differentiating an actual vehicle body slip angle βa.
[Math 5] $κ = \frac{\sqrt{{\left(Xg+Xoff\right)}^{2} + {\left(Yg+Yoff\right)}^{2}}}{\sqrt{{\left(\frac{Fx}{m}\right)}^{2} + {\left(\frac{Fy}{m}\right)}^{2}}}$ (16)

When the variable κ is less than 1, the redistribution unit 44 may correct the target braking/driving forces Ff and Fr by multiplying the target braking/driving forces Ff and Fr calculated by the front and rear wheel target driving force calculation unit 41 by the variable κ.

### (Advantageous Effects of Embodiment)

(1) A travel assistance method includes: calculating a target yaw rate from vehicle speed and a steering angle of a vehicle; determining a target lateral position at a forward gaze distance ahead, based on the target yaw rate, and calculating a target slip angle to cause a vehicle body to point to the target lateral position; calculating target braking/driving forces of a front wheel and a rear wheel according to the target slip angle; calculating at least one of a slip ratio of a wheel or a wheel speed difference between a front wheel and a rear wheel as a tire state quantity; when the calculated tire state quantity does not exceed a predetermined allowable limit, causing a front wheel and a rear wheel to generate the target braking/driving forces; when the calculated tire state quantity exceeds the predetermined allowable limit, correcting a target braking force of a front wheel and/or a rear wheel in such a way that the tire state quantity becomes less than or equal to the predetermined allowable limit, and causing a front wheel and a rear wheel to generate the target braking/driving forces after correction; and when the vehicle is turning, suppressing correction of the target braking/driving forces. Because of this configuration, since the control of the target braking/driving forces to achieve the target slip angle can be suppressed from being limited by the tire state quantity, it is possible to improve a balance between the slip angle achieving suitable steering stability performance and the tire state quantity ensuring stability.
(2) When the vehicle is turning, by setting the predetermined allowable limit as the tire state quantity when the target braking/driving forces to achieve the target slip angle are generated, the travel assistance method may suppress correction of the target braking/driving forces. Because of this configuration, it is possible to suppress the control of the target braking/driving forces to achieve the target slip angle from being limited by the tire state quantity.
(3) The travel assistance method may set the set allowable limit of a slip ratio of a front wheel to a smaller value at a time of braking than a value at a time of driving, and set the set allowable limit of a slip ratio of a rear wheel to a larger value at a time of braking than a value at a time of driving. Because of this configuration, change in loads on the front and rear wheels during acceleration and deceleration can be reflected.
(4) The travel assistance method may calculate both a slip ratio of a wheel and a wheel speed difference between a front wheel and a rear wheel as the tire state quantity and, when at least one of the calculated slip ratio or wheel speed difference exceeds the set allowable limit, correct the target braking/driving forces. Because of this configuration, even in a situation in which estimation precision of the slip ratio deteriorates, it is possible to improve stability.
(5) The target slip angle may be a target value of a vehicle body slip angle of the vehicle body or a target value of a tire slip angle of a wheel of the vehicle. Since by using the vehicle body slip angle as the target slip angle, a direction of the vehicle body during turning can be controlled, it is possible to prevent a line of sight of the driver from deviating from a target travel line. By using the tire slip angle as the target slip angle, oversteer and understeer can be suppressed.
(6) When the tire state quantity exceeds the allowable limit, the travel assistance method may determine whether or not the tire state quantity becomes less than or equal to the allowable limit by correcting a distribution ratio of the target braking/driving forces, and when determining that the tire state quantity does not become less than or equal to the allowable limit, the travel assistance method may correct the target braking/driving forces in such a way that a sum of the target braking/driving forces of a front wheel and a rear wheel decreases, while maintaining a distribution ratio of the target braking/driving forces between a front wheel and a rear wheel.

In addition, when determining that the tire state quantity does not become less than or equal to the allowable limit, the travel assistance method may correct the target braking/driving forces in such a way that target braking/driving force of one wheel of a front wheel and a rear wheel where a slip ratio exceeds the allowable limit decreases. Because of this configuration, it is possible to prevent the tire state quantity from exceeding the allowable limit.

(7) When the tire state quantity exceeds the allowable limit, the travel assistance method may determine whether or not resultant force of longitudinal force and lateral force exerted on the vehicle exceeds a friction limit of a tire. When determining that the resultant force exceeds the friction limit, the travel assistance method may correct the target braking/driving forces in such a way that a sum of the target braking/driving forces of a front wheel and a rear wheel decreases, while maintaining a distribution ratio of the target braking/driving forces between a front wheel and a rear wheel. Because of this configuration, it is possible to prevent the tire state quantity from exceeding the allowable limit even in a situation in which estimation precision of the slip ratio deteriorates.

### Reference Signs List

- 1: Vehicle
- 10: Travel assistance device
- 11: Steering angle sensor
- 12: Yaw rate sensor
- 13: Acceleration sensor
- 14: Driving mode switch
- 15: Brake sensor
- 16: Wheel speed sensor
- 17: Accelerator opening sensor
- 18: Chassis controller
- 19: Brake controller
- 20: Drive source controller
- 21: Braking device
- 22: Drive source

## Claims

1. A travel assistance method comprising:
calculating a target yaw rate from vehicle speed and a steering angle of a vehicle;
determining a target lateral position at a forward gaze distance ahead, based on the target yaw rate, and calculating a target slip angle to cause a vehicle body to point to the target lateral position;
calculating target braking/driving forces of a front wheel and a rear wheel according to the target slip angle;
calculating at least one of a slip ratio of a wheel or a wheel speed difference between a front wheel and a rear wheel as a tire state quantity;
when the calculated tire state quantity does not exceed a predetermined allowable limit, causing a front wheel and a rear wheel to generate the target braking/driving forces;
when the calculated tire state quantity exceeds the predetermined allowable limit, correcting a target braking force of a front wheel and/or a rear wheel in such a way that the tire state quantity becomes less than or equal to the predetermined allowable limit, and causing a front wheel and a rear wheel to generate the target braking/driving forces after correction; and
when the vehicle is turning, suppressing correction of the target braking/driving forces.

2. The travel assistance method according to claim 1, wherein when the calculated tire state quantity exceeds the predetermined allowable limit, the travel assistance method corrects a distribution ratio of the target braking/driving forces between a front wheel and a rear wheel or a sum of the target braking/driving forces of a front wheel and a rear wheel, and causes a front wheel and a rear wheel to generate the target braking/driving forces after correction.

3. The travel assistance method according to claim 1 or 2, wherein when the vehicle is turning, the travel assistance method suppresses correction of the target braking/driving forces due to the calculated tire state quantity exceeding the predetermined allowable limit.

4. The travel assistance method according to any one of claims 1 to 3, wherein when the vehicle is turning, by setting the predetermined allowable limit as the tire state quantity when the target braking/driving forces to achieve the target slip angle are generated, the travel assistance method suppresses correction of the target braking/driving forces.

5. The travel assistance method according to claim 4, wherein
the travel assistance method sets the predetermined allowable limit of a slip ratio of a front wheel to a smaller value at a time of braking than a value at a time of driving, and
sets the predetermined allowable limit of a slip ratio of a rear wheel to a larger value at a time of braking than a value at a time of driving.

6. The travel assistance method according to any one of claims 1 to 5, wherein the travel assistance method calculates both a slip ratio of a wheel and a wheel speed difference between a front wheel and a rear wheel as the tire state quantity and, when at least one of the calculated slip ratio or wheel speed difference exceeds the predetermined allowable limit, corrects the target braking/driving forces.

7. The travel assistance method according to any one of claims 1 to 6, wherein the target slip angle is a target value of a vehicle body slip angle of the vehicle body or a target value of a tire slip angle of a wheel of the vehicle.

8. The travel assistance method according to any one of claims 1 to 7, wherein
when the tire state quantity exceeds the allowable limit, the travel assistance method determines whether or not the tire state quantity becomes less than or equal to the allowable limit by correcting a distribution ratio of the target braking/driving forces, and
when determining that the tire state quantity does not become less than or equal to the allowable limit, the travel assistance method corrects the target braking/driving forces in such a way that a sum of the target braking/driving forces of a front wheel and a rear wheel decreases, while maintaining a distribution ratio of the target braking/driving forces between a front wheel and a rear wheel.

9. The travel assistance method according to any one of claims 1 to 7, wherein
when the tire state quantity exceeds the allowable limit, the travel assistance method determines whether or not the tire state quantity becomes less than or equal to the allowable limit by correcting a distribution ratio of the target braking/driving forces, and
when determining that the tire state quantity does not become less than or equal to the allowable limit, the travel assistance method corrects the target braking/driving forces in such a way that target braking/driving force of one wheel of a front wheel and a rear wheel where a slip ratio exceeds the allowable limit decreases.

10. The travel assistance method according to any one of claims 1 to 7, wherein
when the tire state quantity exceeds the allowable limit, the travel assistance method determines whether or not resultant force of longitudinal force and lateral force exerted on the vehicle exceeds a friction limit of a tire; and
when determining that the resultant force exceeds the friction limit, the travel assistance method corrects the target braking/driving forces in such a way that a sum of the target braking/driving forces of a front wheel and a rear wheel decreases, while maintaining a distribution ratio of the target braking/driving forces between a front wheel and a rear wheel.

11. A travel assistance device comprising:
a controller configured to set a target braking/driving force; and a driving force source or a braking device configured to generate the target braking/driving forces at a front wheel and a rear wheel,
wherein the controller executes processing including:
calculating a target yaw rate from vehicle speed and a steering angle of a vehicle;
determining a target lateral position a forward gaze distance ahead, based on the target yaw rate, and calculating a target slip angle to cause a vehicle body to point to the target lateral position;
calculating the target braking/driving forces of a front wheel and a rear wheel according to the target slip angle;
calculating at least one of a slip ratio of a wheel or a wheel speed difference between a front wheel and a rear wheel as a tire state quantity;
when the calculated tire state quantity does not exceed a predetermined allowable limit, causing the driving force source or the braking device to generate the target braking/driving forces;
when the calculated tire state quantity exceeds the predetermined allowable limit, correcting a target braking force of a front wheel and/or a rear wheel in such a way that the tire state quantity becomes less than or equal to a predetermined allowable limit, and causing the driving force source or the braking device to generate the target braking/driving forces after correction; and
when the vehicle is turning, suppressing correction of the target braking/driving forces.
